# EUROPEAN PATENT SPECIFICATION

(11) **EP 1 854 994 B1**
(45) Date of publication and mention of the grant of the patent: **18.01.2012**
(21) Application number: 07107927.1
(22) Date of filing: 10.05.2007
(51) Int. Cl.: F02M 55/02, F16L 35/00

(54) **Protective device for terminations of pipes carrying fluids under pressure in an engine, especially for marine or special applications**
Schutzvorrichtung für Endstücke von Rohren in einem Motor, die unter Druck stehende Flüssigkeiten führen, speziell für Marine- oder besondere Anwendungen
Dispositif de protection pour les extrémités des tuyaux conduisant les liquides sous pression dans un moteur, spécialement pour des applications marines ou spéciales

(30) Priority: 12.05.2006 IT MI20060940
(43) Date of publication of application: 14.11.2007
(73) Proprietor: FPT INDUSTRIE S.P.A., 35012 Camposampiero (IT)
(72) Inventor: VALLENARI, Maurizio, 21012, CASSANO MAGNAGO (IT)
(74) Representative: Borsano, Corrado

(56) References cited:
- DE-A1- 3 638 579
- DE-B1- 2 434 349
- GB-A- 1 392 121
- GB-A- 2 131 118
- JP-A- 59 153 966
- JP-A- 2004 036 751
- US-A- 4 114 929
- US-A- 5 895 076
- PATENT ABSTRACTS OF JAPAN vol. 2000, no. 14, 5 March 2001 (2001-03-05) & JP 2000 320426 A (USUI INTERNATL IND CO LTD), 21 November 2000 (2000-11-21)

## Description

The present invention relates to a protective device for terminations of pipes carrying fluids under pressure in an engine, especially for marine or special applications.

The field of application of the present invention especially regards engines for marine or special applications, in which the main parts of the surface of the engine close to the pipes delivering pressurized fluids do not reach excessively high temperatures, in that these parts are generally clad in adiabatic jackets, or with liquid-cooled air gaps, for thermal decoupling from the surrounding environment such as US 5,895,076, JP 2004036751, GB 1,392,121, JP 59153966.

Also in order to meet safety standards, pipes outside the engine that deliver pressurized fluids, especially fuel and oil, at not particularly high pressures (for instance around 5 bar), must be appropriately shielded against the possibility of unexpected fracturing, for instance due to thermal shock, vibrations or defects in materials.

In particular, in the event of a fracture, it is necessary to prevent the pipe terminations from generating sudden splashes of fluid that can be scattered over the engine and ignite when coming into contact with the hottest parts thereof, such as turbines, exhaust manifolds, cylinder heads (in the area of the gas exhaust openings).

Moreover it must be possible to recognize the point of failure in order to carry out the necessary repair operations.

Protective jacketing systems using soft, not stiff, fire-retardant materials that are wrapped around the pipes are known in the prior art: however, these materials can become impregnated with fluid and thus eventually lose their protective properties. Moreover they are not the ideal solution for protecting pipe terminations.

Therefore the purpose of this invention is to produce a protective device for terminations of pipes carrying fluids under pressure, especially oil and fuel, in an engine, especially for marine applications, which is capable of overcoming the aforesaid drawbacks.

The object of the present invention is a protective device for the pipe termination comprising two coupled half-bearings, that envelop the termination at the point of connection to the engine structure. There is a double seal that completely encapsulates the pipe termination.

Moreover discharge ducts are provided to allow the fluid leaking from the fractured pipe to flow outwards in a visible manner, consisting of drainage ducts through which the fluid can be seen to flow, in order to locate and repair the point of failure.

In this way the engine is still soiled, but at controlled and desired points, in which the temperatures are not high, and not at random with splashing of parts that can reach high temperatures.

In particular the present invention relates to a protective device for terminations of pipes carrying fluids under pressure, especially oil and fuel, in an engine, especially for marine applications, as described more fully in the claims, which are an integral part of this description.

Further characteristics and advantages of the invention will be more apparent in the light of the detailed description of a preferred embodiment and of an alternative embodiment thereof, illustrated, by way of a non-limiting example, with the aid of the accompanying drawings, wherein:
- figure 1 shows an example of the protective device according to the present invention;
- figure 2 shows a variant thereof.

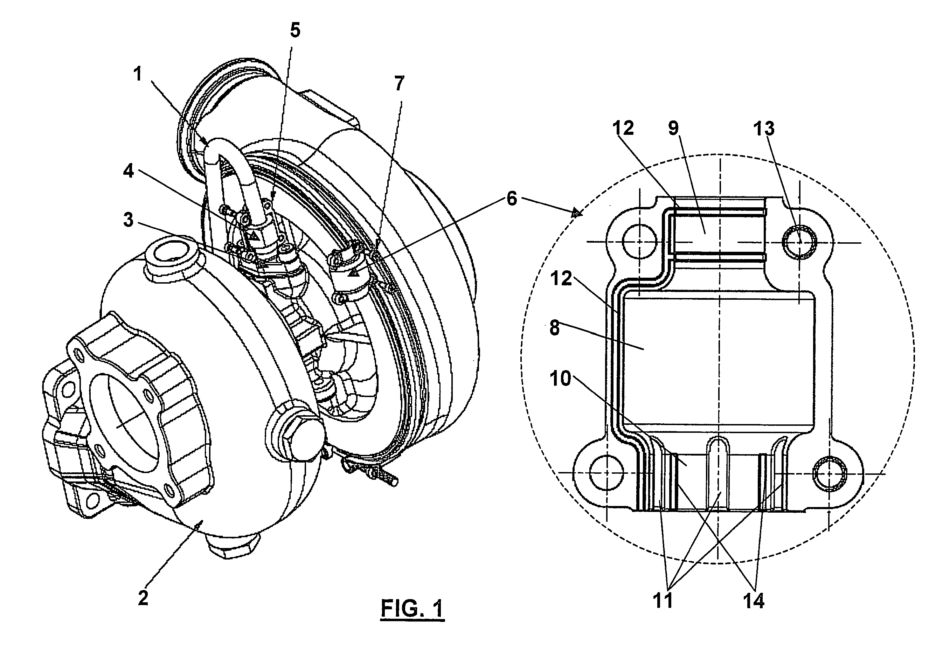

Figure 1 shows an example of the termination 1 of a pipe delivering oil to a turbine 2 of an engine not illustrated in the drawing.

The termination 1 is fixed to a flange 3 by means of a nut 4.

The protective device of the termination 1 comprises two half-bearings 5 and 6 which are coupled and fastened together by means of screws 7.

The two half-bearings are substantially the same, one of which (6) is illustrated in the enlarged view at the side. It comprises:
- a central part 8 suitable to contain the nut 4, or in any case to completely envelop the fixing element of the pipe termination 1;
- a collar 9 at the pipe termination side, having a diameter of a size such as to seal the pipe termination 1;
- a collar 10 at the side opposite the pipe termination, comprising a system to discharge the fluid that may leak into the protective device in case of fracturing of the pipe termination: in particular it comprises grooves 11 connecting the inside with the outside.

Moreover a seal 12 may be applied to the lateral surfaces of the half bearings. For instance it may be a previously applied silicone seal with slight grooving. The seal 12 may comprise protrusions 15 on the rim for a better sealing.

"Anti-vibration keys" 14 may be present, for example on the collar 10, suitable to prevent the clearance between the metal parts from turning into a possible knocking effect between the surfaces and thus generating noise.

Holes 13 are provided for the fastening screws that fasten the two half-bearings together.

The two half-bearings can be made of any material, provided said material guarantees resistance to temperatures of up to 190°C, for example resin or plastic, or die-cast or precision-cast aluminium.

The protective device is mounted after tightening the pipe termination to the engine, thus it can also be advantageously used on existing engines that have been in use for some time.

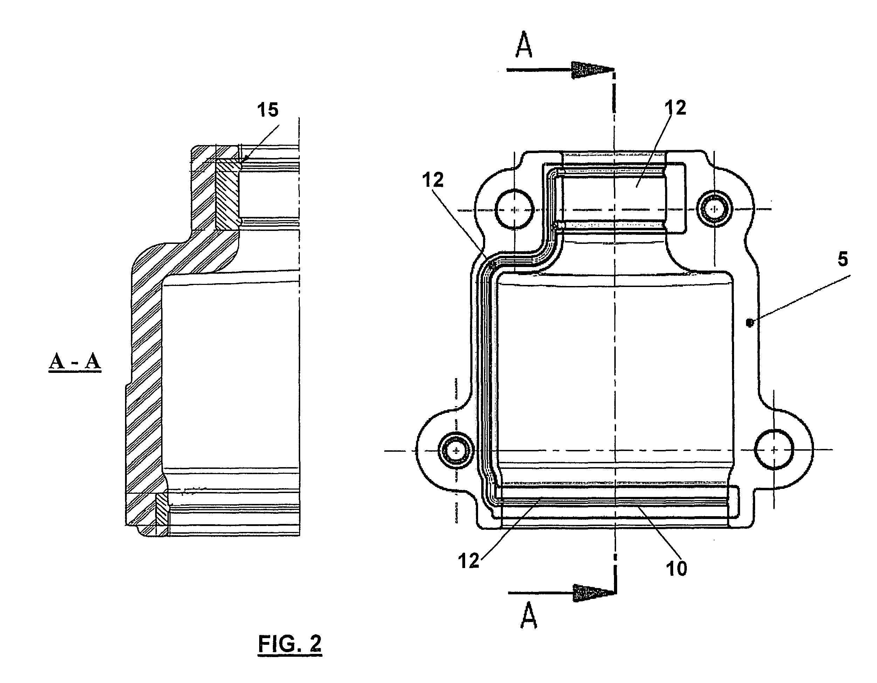

With reference to Fig. 2, an alternative embodiment of the protective device is suitable for use on pipe terminations mounted on polygonal head screw connections (e.g. with a hex head) instead of flange connections.

In this case the collar 10 of the half-bearing at the side opposite the pipe termination has no grooves 11 connecting the inside with the outside, in that the function of discharging the fluid, which may leak into the protective device in the event of a fracture in the pipe termination, is performed by the non-coinciding shapes of the collar 10 and of the polygonal head of the nut connection, the edges of which coincide with the inside surface of the collar 10, while the central parts are further away, acting as grooves.

It will be apparent to the person skilled in the art that other alternative and equivalent embodiments of the invention can be conceived and reduced to practice without departing from the invention.

From the description set forth above it will be possible for the person skilled in the art to embody the invention without introducing any further construction details.

## Claims

1. Protective device for terminations of pipes carrying fluids under pressure in an engine, especially for marine or special applications,
**characterized in that** it comprises:
- two coupled half-bearings (5, 6), that envelop the termination at the point of connection to said engine, completely encapsulating the pipe termination,
- discharge ducts (11) suitable to allow said fluid to flow outwards in a visible manner, in case of fracturing of said terminations, consisting of drainage ducts through which the fluid can be seen to flow, in order to locate and repair the point of failure.

2. Device according to claim 1, **characterized in that** each of said half-bearings comprises:
- a central part (8) suitable to completely encapsulate a fastening element (4) of said termination (1);
- a first collar (9) at the pipe termination side, of a size such as to seal said termination (1);
- a second collar (10) at the side opposite the pipe termination.

3. Device according to claim 2, **characterized in that** said second collar (10) comprises grooves (11) connecting the inside with the outside of the device, suitable for forming said discharge ducts.

4. Device according to claim 2, **characterized in that**, in case of pipe terminations mounted on polygonal head screw connections, said second collar (10) has a shape that does not coincide with that of said polygonal head, so that said discharge ducts are formed by said non-coinciding shapes.

5. Device according to claim 2, **characterized in that** it comprises a seal (12) at the lateral surfaces.

6. Device according to claim 4, **characterized in that** said seal (12) is a previously applied silicone seal with grooves in said lateral surfaces.

7. Device according to claim 2, **characterized in that** it comprises holes (13) for the fastening screws that fasten the two half-bearings together.

8. Device according to claim 5, **characterized in that** said seal (12) comprises protrusions (15) on the rim.

9. Device according to claim 2, **characterized in that** "anti-vibration keys" (14) are present on the second collar (10), to prevent the clearance between the metal parts from turning into a possible knocking effect between the surfaces and thus generating noise.

## Patentansprüche

1. Schutzvorrichtung für Endstücke von Rohren, die unter Druck stehende Fluide in einer Maschine führen, insbesondere für Marine-oder Spezialanwendungen,
**dadurch gekennzeichnet, dass** sie umfasst:
- zwei gekoppelte Halblager (5, 6), die das Endstück an dem Anschlusspunkt an die Maschine umhüllen, wobei das Rohrendstück vollständig eingekapselt ist,
- Austragskanäle (11), die geeignet sind, zuzulassen, dass das Fluid im Fall eines Bruchs der Endstücke auf eine sichtbare Weise nach außen strömt, die aus Ablaufkanälen bestehen, durch die das Strömen des Fluids zu sehen ist, um den Punkt des Versagens zu lokalisieren und zu reparieren.

2. Vorrichtung nach Anspruch 1,
**dadurch gekennzeichnet, dass** jedes der Halblager umfasst:
- einen zentralen Teil (8), der geeignet ist, ein Befestigungselement (4) des Endstücks (1) vollständig einzukapseln;
- einen ersten Bund (9) an der Rohrendstückseite mit einer solchen Größe, dass das Endstück (1) abgedichtet ist;
- einen zweiten Bund (10) an der entgegengesetzten Seite des Rohrendstücks.

3. Vorrichtung nach Anspruch 2,
**dadurch gekennzeichnet, dass**
der zweite Bund (10) Nuten (11) umfasst, die die Innenseite mit der Außenseite der Vorrichtung verbinden und geeignet sind, die Austragskanäle zu bilden.

4. Vorrichtung nach Anspruch 2,
**dadurch gekennzeichnet, dass**
im Fall von Rohrendstücken, die an Schraubverbindungen mit Polygonkopf montiert sind, der zweite Bund (10) eine Form aufweist, die nicht mit der des Polygonkopfes zusammenfällt, sodass die Austragskanäle durch die nicht zusammenfallenden Formen gebildet sind.

5. Vorrichtung nach Anspruch 2,
**dadurch gekennzeichnet, dass**
sie eine Dichtung (12) an den Seitenflächen umfasst.

6. Vorrichtung nach Anspruch 4,
**dadurch gekennzeichnet, dass**
die Dichtung (12) eine zuvor aufgebrachte Silikondichtung mit Nuten in den Seitenflächen ist.

7. Vorrichtung nach Anspruch 2,
**dadurch gekennzeichnet, dass**
sie Löcher (13) für die Befestigungsschrauben, die die zwei Halblager aneinander befestigen, umfasst.

8. Vorrichtung nach Anspruch 5,
**dadurch gekennzeichnet, dass**
die Dichtung (12) am Rand Vorsprünge (15) umfasst.

9. Vorrichtung nach Anspruch 2,
**dadurch gekennzeichnet, dass**
an dem zweiten Bund (10) "Antivibrationsnasen" (14) vorhanden sind, um zu verhindern, dass der Zwischenraum zwischen den Metallteilen sich zu einem möglichen Klopfeffekt zwischen den Flächen wandelt und somit Geräusch erzeugt.

## Revendications

1. Dispositif de protection pour les extrémités des tuyaux conduisant les liquides sous pression dans un moteur, spécialement pour des applications marines ou spéciales,
**caractérisé en ce qu'**il comprend :
- deux demi-paliers couplés (5, 6), qui enveloppent l'extrémité au point de raccordement au dit moteur, en renfermant complètement l'extrémité de tuyau,
- des conduits de décharge (11) aptes à permettre au dit liquide de s'écouler vers l'extérieur de manière visible, en cas de fracture desdites extrémités, se composant de conduits de drainage à travers lesquels l'écoulement du liquide est visible, afin de localiser et de réparer le point de défaillance.

2. Dispositif selon la revendication 1, **caractérisé en ce que** chacun desdits demi-paliers comprend :
- une partie centrale (8) apte à renfermer complètement un élément de fixation (4) de ladite extrémité (1) ;
- un premier collier (9) sur le côté d'extrémité de tuyau, d'une taille permettant de sceller ladite extrémité (1) ;
- un deuxième collier (10) sur le côté opposé à l'extrémité de tuyau.

3. Dispositif selon la revendication 2, **caractérisé en ce que** ledit deuxième collier (10) comprend des rainures (11) reliant l'intérieur à l'extérieur du dispositif, aptes à former lesdits conduits de décharge.

4. Dispositif selon la revendication 2, **caractérisé en ce que**, dans le cas où des extrémités de tuyau sont montées sur des raccordements de vis à tête polygonale, ledit deuxième collier (10) a une forme qui ne coïncide pas avec celle de ladite tête polygonale, de sorte que lesdits conduits de décharge sont formés par lesdites formes ne coïncidant pas.

5. Dispositif selon la revendication 2, **caractérisé en ce qu'**il comprend un joint (12) aux surfaces latérales.

6. Dispositif selon la revendication 4, **caractérisé en ce que** ledit joint (12) est un joint de silicone appliquée au préalable avec des rainures dans lesdites surfaces latérales.

7. Dispositif selon la revendication 2, **caractérisé en ce qu'**il comprend des trous (13) pour les vis de fixation qui fixent les deux demi-paliers l'un à l'autre.

8. Dispositif selon la revendication 5, **caractérisé en ce que** ledit joint (12) comprend des protubérances (15) sur le bord.

9. Dispositif selon la revendication 2, **caractérisé en ce que** des « clés anti-vibrations » (14) sont présentes sur le deuxième collier (10) pour empêcher que l'espacement entre les parties métalliques n'engendre un éventuel effet de claquement entre les surfaces provoquant un bruit.
